# EUROPÄISCHE PATENTSCHRIFT

(11) **EP 0 868 651 B1**
(45) Veröffentlichungstag und Bekanntmachung des Hinweises auf die Patenterteilung: **31.07.2002**
(21) Anmeldenummer: 96946078.1
(22) Anmeldetag: 13.12.1996
(51) Int. Cl.: G01D 7/02, G01P 1/08, B60Q 1/54

(54) **ANZEIGEEINRICHTUNG**
INDICATOR
INDICATEUR

(30) Priorität: 19.12.1995 DE 19547375
(43) Veröffentlichungstag der Anmeldung: 07.10.1998
(73) Patentinhaber: ROBERT BOSCH GMBH, 70442 Stuttgart (DE)
(72) Erfinder: KNOLL, Peter, D-76275 Ettlingen (DE); GRAF, Stefan, D-71706 Markgröningen (DE); HÄBERER, Thomas, D-70188 Stuttgart (DE); OREANS, Derk, D-71229 Leonberg (DE); GAUS, Hermann, D-70619 Stuttgart (DE)
(74) Vertreter: Friedmann, Jürgen, Dr.-Ing.
(86) Internationale Anmeldenummer: DE9602400
(87) Internationale Veröffentlichungsnummer: WO9722853

(56) Entgegenhaltungen:
- FR-A- 2 447 286
- US-A- 4 262 255
- US-A- 4 647 901
- PATENT ABSTRACTS OF JAPAN vol. 14, no. 132 (M-0948), 13.März 1990 & JP 02 002038 A (NEC NIIGATA LTD), 8.Januar 1990,

## Beschreibung

### Stand der Technik

Die Erfindung geht aus von einer Anzeigeeinrichtung für ein Fahrzeug zur Anzeige von mindestens zwei einander zugeordneten Anzeigegrößen mit Hilfe von Skalensegmenten nach der Gattung des Anspruchs 1.

Anzeigeeinrichtungen der hier angesprochenen Art sind bekannt. Sie dienen beispielsweise der Regelung der Fahrgeschwindigkeit eines Kraftfahrzeuges. Die als Sollgeschwindigkeit bezeichnete programmierbare Setzgröße für die Geschwindigkeitsregelung wird beispielsweise durch Drücken einer Setztaste festgelegt. Eine Anzeige dieser Setzgeschwindigkeit findet in der Regel nicht statt. Es gibt auch Ausführungsformen, bei der die gewünschte Setzgeschwindigkeit durch eine separate Anzeige wiedergegeben wird, die von dem üblichen Geschwindigkeitsanzeigegerät getrennt ist.

Aus der US 4,647,901 ist eine Geschwindigkeitsanzeige in einem Fahrzeug bekannt, bei der eine aktuelle Fahrzeuggeschwindigkeit durch das Aufleuchten von Segmenten in einer Balkenanzeige dargestellt wird. Durch Verändern der Beleuchtung eines Skalensegments wird zusätzlich eine gesetzte Geschwindigkeit dargestellt.

Aus der FR 2 447 286 ist eine analoge Zeigeranzeige bekannt, bei der in ein Zifferblatt Leuchtdioden eingebracht sind, wobei durch das Aufleuchten einer der Leuchtdioden eine gewünschte Geschwindigkeit angezeigt wird.

### Vorteile der Erfindung

Die erfindungsgemäße Anzeigeeinrichtung mit den in Anspruch 1 genannten Merkmalen hat dem gegenüber den Vorteil, daß der Fahrer des Fahrzeuges zwei einander zugeordnete Anzeigegrößen, hier die aktuelle Fahrgeschwindigkeit und die gewünschte Sollgeschwindigkeit einfach erfassen kann, so daß die Fahrsicherheit wesentlich erhöht wird.

Bei einer bevorzugten Ausführungsform der Anzeigeeinrichtung sind zwei getrennte Beleuchtungseinrichtungen vorgesehen, von denen eine mehreren Skalensegmenten der Anzeigeeinrichtung zugeordnet ist und die andere jeweils einem einzigen Skalensegment zugehörige Einzelbeleuchtungselemente aufweist. Bei einer Anzeigeeinrichtung dieser Art kann die Anzeige der aktuellen Geschwindigkeit kontinuierlich dargestellt werden, während durch die zweite Beleuchtungseinrichtung der Geschwindigkeitswert herausgehoben werden kann, der der Sollgeschwindigkeit entspricht. Die Skalensegmente, die die Sollgeschwindigkeit wiedergeben, sind durch Farbe, Kontrast und/oder Helligkeit gegenüber den Skalensegmenten, mit denen die aktuelle Geschwindigkeit angezeigt wird, deutlich abhebbar.

Bevorzugt wird außerdem eine Ausführungsform der Anzeigeeinrichtung, die eine Beleuchtungseinrichtung aufweist, die mehreren Skalensegmenten zugeordnet ist und dadurch, daß zumindest einigen vorzugsweise allen Skalensegmenten eine Schalteinrichtung zugeordnet ist, die die optischen Eigenschaften der Skalensegmente beeinflußt. Mit einer Anzeigeeinrichtung dieser Art ist es möglich, einzelne Skalensegmente durch ihre optischen Eigenschaften so hervorzuheben, daß sie von den übrigen Skalensegmenten deutlich abgehoben und leicht erkennbar sind. Der Fahrer eines Fahrzeuges kann bei einer derartigen Anzeigeeinrichtung die aktuelle Geschwindigkeit einfach ablesen und dabei gleichzeitig die programmierte Setzgröße beziehungsweise die Sollgeschwindigkeit erfassen.

Weitere Ausgestaltungsmöglichkeiten ergeben sich aus den übrigen Unteransprüchen.

### Zeichnung

Die Erfindung wird im folgenden anhand der Zeichnung näher erläutert. Es zeigen:
- Figur 1: einen schematischen Schnitt durch eine erste Ausführungform einer erfindungsgemäßen Anzeigeeinrichtung;
- Figur 2: eine Draufsicht auf einen Ausschnitt einer Anzeigeeinrichtung gemäß Figur 1;
- Figur 3: einen schematischen Schnitt durch eine weitere Ausführungsform einer Anzeigeeinrichtung;
- Figur 4: eine Draufsicht auf einen Teil einer Anzeigeeinrichtung gemäß Figur 3;
- Figur 5: einen Schnitt durch eine weitere Ausführungsform der Anzeigeeinrichtung;
- Figur 6: einen Teilbereich einer Anzeigeeinrichtung in Draufsicht;
- Figur 7: einen Schnitt durch ein weiteres Ausführungsbeispiel einer Anzeigeeinrichtung und
- Figur 8: ein Detail der in Figur 7 dargestellten Anzeigeeinrichtung.

### Beschreibung der Ausführungsbeispiele

Die im folgenden beschriebene Anzeigeeinrichtung dient dazu, zwei einander zugeordnete Anzeigegrößen mit Hilfe von Skalensegmenten darzustellen. Rein beispielhaft wird im folgenden davon ausgegangen, daß es sich bei der hier dargestellten Anzeigeeinrichtung um eine Anzeige einer automatischen Geschwindigkeitsregelung handelt. Die Anzeige gibt einerseits die aktuelle Fahrgeschwindigkeit und andererseits eine vom Fahrer programmierbare Setzgröße, nämlich die Sollgeschwindigkeit an.

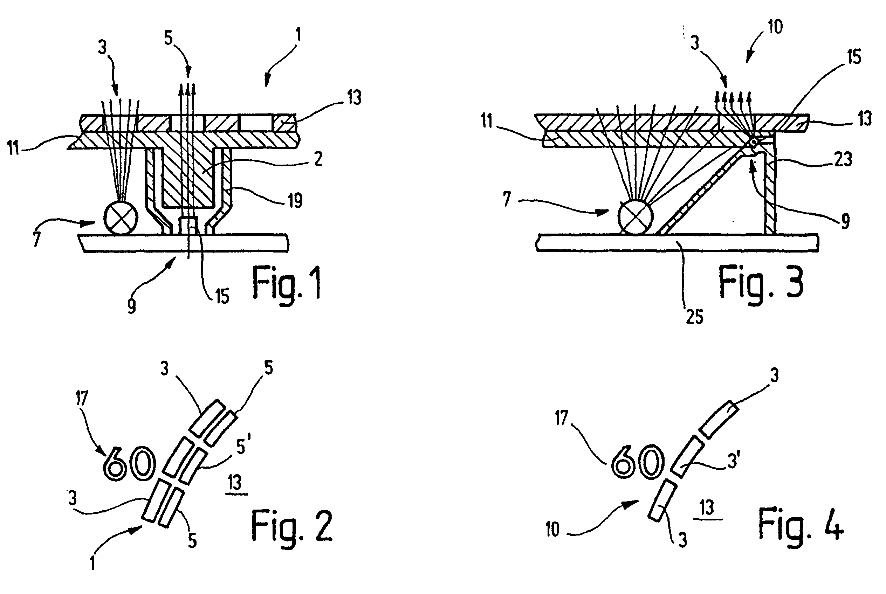

Die in Figur 1 gezeigte Schnittdarstellung zeigt eine erste Ausführungsform einer Anzeigeeinrichtung 1, die zwei einander zugeordnete Anzeigegrößen, nämlich die Istgeschwindigkeit und die Sollgeschwindigkeit wiedergibt. Zur Darstellung der beiden Anzeigegrößen sind Skalensegmente 3 und 5 vorgesehen. Das erste Skalensegment 3 dient beispielsweise der Anzeige der Istgröße, während das zweite Skalensegment 5 der Darstellung der Sollgröße dient.
Die Skalensegmente 3 dienen der Anzeige der Istgeschwindigkeit und sind Teil einer Analoganzeigenskala, die mit einer herkömmlichen Zeigeranzeige zusammenwirkt.

Die Anzeigeeinrichtung 1 weist zwei Beleuchtungseinrichtungen 7 und 9 auf, von denen die erste Beleuchtungseinrichtung 7 den Skalensegmenten 3 und die zweite Beleuchtungseinrichtung 9 den Skalensegmenten 5 zugeordnet ist. Die erste Beleuchtungseinrichtung 7 kann durch beliebige Leuchtmittel realisiert werden, beispielsweise durch LED's, Glühlampen, Kaltkatodenfluoreszenslampen oder dergleichen. Die Leuchtmittel geben, wie durch Striche angedeutet, Licht ab, das durch eine Leuchtscheibe 11 hindurchtritt und auf eine Anzeigefläche 13, beispielsweise auch ein Zifferblatt eines Mehrfachanzeigegerätes eines Fahrzeuges auftrifft. Die Anzeigefläche 13 ist mit Durchbrechungen versehen, die die Skalensegmente 3 und 5 bilden. Die ersten Skalensegmente 3 werden also von der ersten Beleuchtungseinrichtung 7 erhellt.

Die zweite Beleuchtungseinrichtung 9 weist Einzelbeleuchtungelemente 15 auf, die jeweils einem einzigen Skalensegment 5 zugeordnet sind.

Aus der in Figur 2 wiedergegebenen Draufsicht auf einen Teil der Anzeigeeinrichtung 1 wird deutlich, daß die Skalensegmente 3 Teil einer von der ersten Beleuchtungseinrichtung 7 hinterleuchteten Skala sind, die auch Ziffernanzeigen 17 umfassen kann. Die Skalensegmente 3 dienen der Anzeige der Istgeschwindigkeit und sind Teil einer Analoganzeigenskala, die mit einer herkömmlichen Zeigeranzeige zusammenwirkt.

Die Skalensegmente 5 sind Teil einer beilaufenden Skala, die der Anzeige der der Istgeschwindigkeit zugeordneten Anzeigengröße, nämlich der Sollgeschwindigkeit dienen.

Die Sollgeschwindigkeit kann bei Drücken einer Setztaste dadurch angezeigt werden, daß ein entsprechendes Skalensegment, beispielsweise das Skalensegment 5' zur Anzeige der Sollgeschwindigkeit 60 km/h zugeordnet ist. Es ist auch möglich alle Skalensegmente 5 bis zu dem Skalensegment 5', das der gewünschten Sollgeschwindigkeit entspricht, zu aktivieren. Dieses geschieht dadurch, daß die zweite Beleuchtungseinrichtung 9 beziehungsweise deren Einzelbeleuchtungselemente 15 aktiviert werden, so daß sich die zugehörigen Skalensegmente 5 gegenüber den Skalensegmenten 3 durch eine unterschiedliche Beleuchtungsstärke beziehungsweise Helligkeit oder durch eine abweichende Farbgebung unterscheiden. Die Skalensegmente 3 können beispielsweise weiß hinterleuchtet sein, während die Skalensegmente 5 zur Anzeige der Setzgröße beziehungsweise Sollgeschwindigkeit in einer anderen Farbe aufleuchten. Die Lichtstrahlen der Einzelbeleuchtungselemente 15 werden, wie anhand von Figur 1 dargestellt, in einen Lichtschacht 19 angeordnet, der optisch von der ersten Beleuchtungseinrichtung 7 getrennt ist und der beispielsweise ein Lichtleitelement 21 aufweisen kann, durch den das von dem Einzelbeleuchtungselement 15 ausgehende Licht, wie durch Pfeile dargestellt, zum Skalensegment 5 weitergeleitet wird.

Das Einzelbeleuchtungselement 15 kann als Leuchtdiode (LED) oder durch eine geeignete andere kleine Lichtquelle realisiert werden.

Der in Figur 3 wiedergegebene Teilschnitt zeigt eine weitere Ausführungsform einer Anzeigeeinrichtung 10, die wiederum zwei Beleuchtungseinrichtungen 7 und 9 aufweist. Gleiche Teile sind mit gleichen Bezugsziffern versehen, so daß auf die zu Figur 1 wiedergegebene Beschreibung verwiesen werden kann.

Die erste Beleuchtungseinrichtung 7 entspricht der anhand von Figur 1 erläuterten. Sie hat die Aufgabe eine Reihe von Skalensegmenten 3 zu beleuchten, die der Anzeige einer ersten Anzeigegröße, beispielsweise der Istgeschwindigkeit, dienen. Die Skalensegmente 3 sind wiederum durch Ausschnitte in einer Anzeigefläche 13 realisiert, die mit einer Leuchtscheibe 11 unterlegt ist. Die Leuchtscheibe 11 und das Zifferblatt beziehungsweise die Anzeigefläche 13 der Anzeigeeinrichtung 10 werden von einer Halte- und Lichtschachteinrichtung 23 gestützt, die -wie die Beleuchtungseinrichtung 7- auf einer Grundplatte 25 angeordnet ist. Im Auflagebereich, der mit dem Randbereich des Skalensegmentes 3 in etwa übereinstimmt, ist die zweite Beleuchtungseinrichtung 9 vorgesehen, die wiederum Einzelbeleuchtungselemente 15 umfaßt, die jeweils einem einzelnen Skalensegment zugeordnet sind. Es zeigt sich, daß die Einzelbeleuchtungselemente 15 hier keine separaten Skalensegmente 5 beleuchten. Vielmehr fallen die durch Pfeile angedeuteten Lichtstrahlen der Einzelbeleuchtungselemente 15 durch die Skalensegmente 3 hindurch und können so von einem Betrachter beziehungsweise einem Fahrer wahrgenommen werden.

Den Skalensegmenten 3 ist also ein umlaufender Lichtkranz aus Einzelbeleuchtungselementen, die beispielsweise durch Leuchtdioden realisiert sind, zugeordnet. Das seitlich von den Einzelbeleuchtungselementen 15 eingestrahlte Licht wird dem von der ersten Beleuchtungseinrichtung 7 ausgehenden Licht überlagert. Aus der Darstellung ist ersichtlich, daß das Licht der ersten Beleuchtungseinrichtung 7 die Anzeigefläche 13 der Anzeigeeinrichtung 10 flächig durchstrahlen kann, also quasi als Hintergrundbeleuchtung dient.

Figur 4 zeigt einen Ausschnitt der Anzeigeeinrichtung 10 in Draufsicht. Charakteristisch ist, daß hier eine einzige Skalensegmentgruppe vorgesehen ist, die durch die Skalensegmente 3 gebildet wird. Auch hier können Ziffern 17 vorgesehen werden, die der Ablesung sowohl der Ist- als auch der Sollgeschwindigkeit dienen.

Die durch die Skalensegmente 3 gebildete Skala wird von der ersten Beleuchtungseinrichtung 7 -beispielsweise weiß- hinterleuchtet. Wenn die Bedienungsperson die Setztaste betätigt, wird ein einzelnes Skalensegment, beispielsweise das Skalensegment 3' zusätzlich von dem zugehörigen Einzelbeleuchtungselement 15 beleuchtet, so daß sich eine erhöhte Helligkeit, vorzugsweise jedoch eine andere Farbe ergibt, als sie bei den übrigen Skalensegmenten 3 gegeben ist. Der Fahrer kann also mit einem Blick die Setzgröße beziehungsweise die Sollgeschwindigkeit ablesen, ohne daß er, wie bei herkömmlichen Geräten, eine andere als die gewünschte Geschwindigkeitsanzeige betrachten müßte. Die aktuelle Geschwindigkeit wird auf den Skalensegmenten 3 mit Hilfe eines hier nicht dargestellten Zeigers angezeigt.

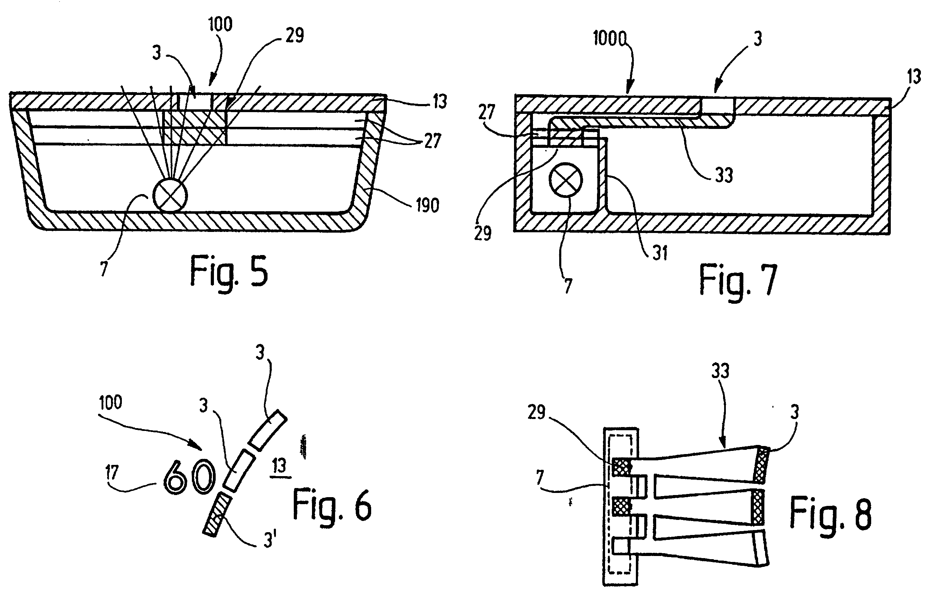

Figur 5 zeigt eine weitere Ausführungsform der Anzeigeeinrichtung 100, die sich dadurch auszeichnet, daß nur eine einzige Beleuchtungseinrichtung 7 vorgesehen ist, die in einer Anzeigefläche 13 vorgesehene, als Ausschnitte realisierte Skalensegmente 3 mit Licht beaufschlagt. Durch Striche ist angedeutet, daß die gesamte Anzeigefläche 13 von dem Licht durchdrungen wird, so daß durch die Beleuchtungseinrichtung 7 eine Hintergrundbeleuchtung realisiert ist. Die Beleuchtungseinrichtung 7 ist in einem als Reflektorkasten wirkenden Lichtschacht 190 untergebracht, dessen Innenfläche beispielsweise reflektierend beschichtet sein kann. Die Beleuchtungseinrichtung 7 wird auf bekannte Weise, wie anhand von Figur 1 erläutert, realisiert.

Unterhalb der als Zifferblatt dienenden Anzeigefläche 13 findet sich eine Flüssigkristall-Schicht 27, die jeweils unter einem Skalensegment 3 eine Schalteinrichtung aufweist, die durch Schaltfelder 29 realisiert ist. Die Schaltfelder 29 dienen als Transmissionsschalter. Sie beeinflussen also die Durchlässigkeit der Flüssigkristall-Schicht 27 im Bereich der Skalensegmente 3. Während bei ausgeschaltetem Schaltfeld das Licht der Beleuchtungseinrichtung 7 die Anzeigefläche 13 ungehindert durchdringen kann, findet bei eingeschaltetem Schaltfeld 29 eine Abschattung statt.

Aus Figur 6, die eine Draufsicht auf einen Teil der Anzeigeeinrichtung 100 wiedergibt, ist ersichtlich, daß ein Skalenfeld 3' dunkler erscheint als die übrigen Skalensegmente 3 der Anzeigeeinrichtung 100. Gleiche Teile in den Figuren 5 und 6 sind mit gleichen Bezugsziffern versehen, so daß auf deren nähere Beschreibung verzichtet werden kann.

Figur 6 zeigt, daß die Skalensegmente 3 durch Ziffern vervollständigt sein können, so daß mittels eines herkömmlichen Zeigers die Istgeschwindigkeit für einen Fahrer deutlich erkennbar angezeigt werden kann. Die bei Betatigen einer Setztaste gewünschte Sollgeschwindigkeit wird dadurch angezeigt, daß ein zugehöriges Skalensegment 3' dunkler erscheint, da hier durch das zugehörige Schaltfeld 29 die Lichtdurchlässigkeit der Flüssigkristall-Schicht 27 reduziert ist.

Nach allem wird deutlich, daß die Anzeigeeinrichtung 100 gegenüber den anhand der Figuren 1 bis 4 dargestellten Ausführungsformen in sofern vereinfacht ist, als lediglich eine einzige Beleuchtungseinrichtung 7 vorgesehen werden muß.

Bei dem anhand von Figur 5 dargestellten Ausführungsbeispiel kann die Beleuchtungseinrichtung 7 einem gebogenen Skalenfeld angepaßt sein. Es ist auch möglich, in dem Lichtschacht 190 der Anzeigeeinrichtung 100 mehrere gradlinig ausgebildete Beleuchtungseinrichtungen innerhalb des kreisbogenförmig ausgebildeten Lichtschachts anzuordnen und damit sämtliche Skalensegmente 3 der Anzeigeeinrichtung 100 zu beleuchten. Dabei können die Skalensegmente 3 möglicherweise ungleich beleuchtet sein, auch wenn die Schaltfelder 29 nicht aktiviert sind, daß heißt, in ihrer Transparenz reduziert sind.

Aus diesem Grund kann die Anzeigeeinrichtung auch abgewandelt werden, wie anhand der Figuren 7 und 8 dargestellt ist. Die Schnittdarstellung in Figur 7 zeigt eine Anzeigeeinrichtung 1000, die wiederum lediglich eine einzige Beleuchtungseinrichtung 7 aufweist. Diese ist hier jedoch durch eine Zwischenwand 31 von dem übrigen Lichtschacht beziehungsweise Reflektorkasten lichtdicht abgeschlossen. In Richtung der Anzeigefläche 13 ist der Raum oberhalb der Beleuchtungseinrichtung 7 wiederum durch eine Flüssigkristall-Schicht 27 abgedeckt, die den Skalensegmenten 3 in der Anzeigeflache 13 zugeordnete Schaltfelder 29 aufweist, die in aktiviertem Zustand den Lichtdurchtritt von der Beleuchtungseinrichtung 7 zu den Skalensegmenten 3 unterbindet beziehungsweise reduziert.

Es zeigt sich, daß das von der Beleuchtungseinrichtung 7 austretende Licht nicht direkt zu den Skalensegmenten 3 gelangen kann. Es ist hier eine Lichtleiteinrichtung 33 vorgesehen, die das von der Beleuchtungseinrichtung 7 austretende die Schaltfelder 29 durchdringende Licht zu den Skalensegmenten 3 leitet.

Aus Figur 8 ist ersichtlich, daß die gestrichelt dargestellte Beleuchtungseinrichtung 7 geradlinig ausgebildet sein kann und daß die Skalensegmente 3 entlang einer Kreislinie gebogen ausgebildet sein können. Die in den Figuren 7 und 8 dargestellte Ausführungsform der Anzeigeeinrichtung 1000 zeichnet sich dadurch aus, daß die Beleuchtungseinrichtung 7 relativ preiswert realisierbar ist, da hier keine gekrümmten Lichtquellen eingesetzt werden müssen, wie dies bei dem Ausführungsbeispiel erforderlich ist, das anhand von Figur 5 erläutert wurde.

Figur 8 läßt erkennen, daß der Lichtaustrittsbereich der Lichtleiteinrichtung 33 dunkel erscheint, wenn die zugehörigen Schaltfelder 29 aktiviert sind. Es ist also möglich, eine Anzeigeeinrichtung 1000 zu realisieren, die eine durchgehende Reihe von Skalensegmenten 3 aufweist, von denen wenigstens eines durch Drücken einer Setztaste optisch abgesetzt erscheint. Es ist möglich, sämtliche Skalensegmente 3 einer Anzeigeeinrichtung 1000 abzudunkeln und nur ein einziges durch Inaktivierung des zugehörigen Schaltfeldes hell erscheinen zu lassen, um einen gewünschten Sollwert der Geschwindigkeit optisch leicht erkennbar zu machen. Auch kann die entgegengesetzte Realisierung möglich sein: nur das gewünschte Skalensegment der vom Fahrer gewählten Sollgeschwindigkeit ist abgedunkelt, während alle anderen Skalensegmente hell erscheinen. Schließlich ist es auch möglich, sämtliche bis zur Sollgeschwindigkeit vorhandenen Skalensegmente mit Hilfe der Schaltfelder gegenüber den übrigen abzuheben, also abzudunkeln oder aufzuhellen.

Durch die räumliche Trennung der Lichtquelle beziehungsweise der Beleuchtungseinrichtung 7 von der Anzeige mittels der Skalensegmente 3 der Anzeigeeinrichtung 1000 können also geradlinig ausgebildete Beleuchtungsquellen einsetzt werden, um eine gekrümmte Skala zu realisieren. Die sich zwischen den Schaltfeldern 29 und Skalensegmenten 3 befindliche Lichtleiteinrichtung 33 wirkt auch über einen Abstand auf die optischen Eigenschaften der Skalensegmente, so daß die Bedienungsperson Ist- und Sollwerte einer Anzeige deutlich unterscheiden kann, so daß die Bedienungssicherheit wesentlich erhöht ist, ohne daß es des Einsatzes teurer Beleuchtungsquellen für die Beleuchtungseinrichtung 7 bedürfe.

Insgesamt wird ersichtlich, daß die Anzeigeeinrichtung, die anhand der Figuren 1 bis 8 erläutert wurde, einfach aufgebaut ist und die Unterscheidung zweier einander zugeordneter Anzeigegrößen ermöglicht. Bei dem anhand der Figuren 1 bis 2 dargestellten Ausführungsbeispiel der Anzeigeeinrichtung 1 kann die Bedienungsperson durch einen Vergleich der beiden nebeneinanderliegenden Skalen, die durch die nebeneinanderliegenden Skalensegmente 3 und 5 realisiert werden, sehr leicht erkennen, ob der Setzwert dem gewünschten Sollwert entspricht. Die beiden Skalen können sich durch unterschiedliche Helligkeit oder Farbe unterscheiden. Bei der Ausführung der beilaufenden Skalen gemäß den Figuren 1 und 2 bedarf es der Verwendung zweier getrennter Beleuchtungseinrichtungen 7 und 9, wobei die zweite Beleuchtungseinrichtung 9 Einzelbeleuchtungselemente 15 aufweist, die jeweils einem der Skalensegmente 5 zugeordnet ist.

Die anhand der Figuren 3 und 4 dargestellte Ausführungsform der Anzeigeeinrichtung 10 zeichnet sich dadurch aus, daß lediglich eine einzige Skalensegmentgruppe vorhanden ist, die durch die Skalensegmente 3 realisiert ist. Innerhalb der Skalensegmente der Skala können einzelne Segmente dadurch hervorgehoben werden, daß deren Farbe oder Helligkeit gegenüber den anderen Segmenten abgehoben ist. Dazu ist die Beleuchtungseinrichtung 9 mit Einzelbeleuchtungselementen 15 versehen, die die Helligkeit einzelner Skalensegmente erhöhen oder Skalensegmente mit einer zusätzlichen Farbe beaufschlagen, so daß sich eine Mischfarbe ergibt, die durch die Beleuchtung der beiden Beleuchtungseinrichtungen 7 und 9 entsteht.

Schließlich wird deutlich, daß die Ausführungsbeispiele der Anzeigeeinrichtungen 100 und 1000, die anhand der Figuren 5 bis 8 erläutert werden, lediglich eine einzige Beleuchtungseinrichtung aufweisen. Entsprechend weisen die Skalen dieser Anzeigeeinrichtungen 100 und 1000 eine einzige Skala auf, die durch Skalensegmente 3 realisiert ist. Innerhalb der Reihe von Skalensegmenten können einzelne durch eine Abweichung der Helligkeit hervorgehoben werden. Die Helligkeitsunterschiede werden durch Schaltfelder 29 eingestellt, die jedem einzelnen Skalensegment 3 zugeordnet sind. Die Schaltfelder 29 können -wie anhand von Figur 5 dargestellt- einem Skalensegment 3 unmittelbar zugeordnet sein oder -wie anhand von Figur 7 erläutert- einer Lichtleiteinrichtung 33, die das von der Beleuchtungseinrichtung 7 ausgehende Licht einem Skalensegment 3 zuführt.

Aus dem Obengesagten wird ohne weiteres deutlich, daß die Anzeigeeinrichtung allgemein einsetzbar ist, also beispielsweise auch dazu, die Ist- beziehungsweise Solltemperatur einer Klimaanlage oder dergleichen anzuzeigen und optisch voneinander abzuheben. Der Aufbau der Anzeigeeinrichtung ist einfach und damit einerseits kostengünstig realisierbar und andererseits störungsunanfällig.

Selbstverständlich ist es im übrigen möglich, auch mehr als zwei nebeneinanderliegende Skalen zu realisieren und die den Skalen zugrundeliegenden Anzeigegrößen durch Farbe, Kontrast und/oder Helligkeit für einen Betrachter unterscheidbar zu machen.

## Patentansprüche

1. Anzeigeeinrichtung für ein Fahrzeug zur Anzeige von mindestens zwei einander zugeordneten Anzeigegrößen, mit einer Analoganzeigenskala, mit einem Zeiger und mit mindestens einer Skalansegmentgruppe, wobei die mindestens eine Skalensegmentgruppe Teil der Analoganzeigenskala ist, wobei eine erste Anzeigegröße gegenüber einer beleuchtbaren Skalensegmentgruppe der mindestens einen Skalensegmentgruppe mit dem Zeiger anzeigbar ist und wobei eine zweite Anzeigegröße mit Hilfe einer beleuchtbaren Skalensegmentgruppe der mindestens einen Skalensegmentgruppe anzeigbar ist, wobei mindestens ein Skalensegment (3; 5) zur Unterscheidung der ersten und der zweiten Anzeigegröße so ansteuerbar ist, dass es durch Farbe, Kontrast und/oder Helligkeit gegenüber den anderen Skalensegmenten unterscheidbar ist.

2. Anzeigeeinrichtung nach Anspruch 1, **dadurch gekennzeichnet, daß** die Anzeigeeinrichtung (1; 10) zwei getrennte Beleuchtungseinrichtungen (7, 9) aufweist, von denen die eine mehreren Skalenelementen (3) zugeordnet ist und die andere jeweils einem einzigen Skalenelement (5) zugeordnete Einzelbeleuchtungselemente (15) aufweist.

3. Anzeigeeinrichtung nach Anspruch 2, **dadurch gekennzeichnet, daß** die beiden Beleuchtungseinrichtungen (7, 9) getrennten Skalensegmentgruppen zugeordnet sind.

4. Anzeigeeinrichtung nach Anspruch 3, **dadurch gekennzeichnet, daß** die Skalensegmente (3, 5) der beiden Skalensegmentgruppen nebeneinander angeordnet sind.

5. Anzeigeeinrichtung nach einem der Ansprüche 2-4, **dadurch gekennzeichnet, daß** beide Beleuchtungseinrichtungen (7, 9) auf eine gemeinsame Skalensegmentgruppe wirken.

6. Anzeigeeinrichtung nach Anspruch 1, **dadurch gekennzeichnet, daß** die Anzeigeeinrichtung (100, 1000) eine Beleuchtungseinrichtung (7) aufweist, die mehreren Skalensegmenten (3) zugeordnet ist, und daß zumindest einigen, vorzugsweise allen Skalensegmenten (3) eine Schalteinrichtung (29) zur Beeinflussung der optischen Eigenschaften der Skalensegmente (3) zugeordnet ist.

7. Anzeigeeinrichtung nach Anspruch 6, **dadurch gekennzeichnet, daß** mit Hilfe der Schalteinrichtung (29) die Helligkeit und/oder Farbe der zugehörigen Skalensegmente (3) beeinflußbar ist.

8. Anzeigeeinrichtung nach Anspruch 6 oder 7, **dadurch gekennzeichnet, daß** mindestens einigen, vorzugsweise allen Skalensegmenten (3) eine Lichtleiteinrichtung (33) zugeordnet ist, und daß die Schalteinrichtung (29) zwischen Lichtleiteinrichtung (33) und Beleuchtungseinrichtung (7) angeordnet ist.

9. Anzeigeeinrichtung nach einem der Ansprüche 2 bis 8, **dadurch gekennzeichnet, daß** durch die Einzelbeleuchtungselemente (15) die Helligkeit und/oder die Farbe der zugehörigen Skalensegmente beeinflußbar ist.

10. Verwendung einer Anzeigeeinrichtung nach einem der Ansprüche 1 bis 10 zur Darstellung von Ist- und Sollwerten einer Anzeigenskala, insbesondere einer automatischen Geschwindigkeitsregelung.

## Claims

1. Indicator for a vehicle for indicating at least two mutually assigned indicated variables, having an analogue indicating scale, having a pointer and having at least one scale segment group, the at least one scale segment group being part of the analogue indicating scale, it being possible to use the pointer to indicate a first indicated variable in relation to an illuminable scale segment group of the at least one scale segment group, and it being possible to use an illuminable scale segment group of the at least one scale segment group to indicate a second indicating variable, it being possible for the purpose of distinguishing between the first and the second indicated variables to drive at least one scale segment (3; 5) such that it can be distinguished from the other scale segments by colour, contrast and/or brightness.

2. Indicator according to Claim 1, **characterized in that** the indicator (1; 10) has two separate illuminating devices (7, 9) of which one is assigned to a plurality of scale elements (3), and the other respectively has individual illuminating elements (15) assigned to a single scale element (5).

3. Indicator according to Claim 2, **characterized in that** the two illuminating devices (7, 9) are assigned to separate scale segment groups.

4. Indicator according to Claim 3, **characterized in that** the scale segments (3, 5) of the two scale segment groups are arranged next to one another.

5. Indicator according to one of Claims 2-4, **characterized in that** the two illuminating devices (7, 9) act on a common scale segment group.

6. Indicator according to Claim 1, **characterized in that** the indicator (100, 1000) has an illuminating device (7) which is assigned to a plurality of scale segments (3), and **in that** at least some, preferably all of the scale segments (3) are assigned a switching device (29) for influencing the optical properties of the scale segments (3).

7. Indicator according to Claim 6, **characterized in that** the switching device (29) can be used to influence the brightness and/or colour of the associated scale segments (3).

8. Indicator according to Claim 6 or 7, **characterized in that** at least some, preferably all of the scale segments (3) are assigned a light guide (33), and **in that** the switching device (29) is arranged between the light guide (33) and illuminating device (7).

9. Indicator according to one of Claims 2 to 8, **characterized in that** the individual illuminating elements (15) can be used to influence the brightness and/or the colour of the associated scale segments.

10. Use of an indicator according to one of Claims 1 to 10 for the purpose of representing actual and desired values of an indicating scale, in particular an automatic speed control.

## Revendications

1. Dispositif d'affichage pour un véhicule destiné à afficher au moins deux grandeurs d'affichage associées l'une à l'autre, comprenant une échelle d'affichage analogique avec une aiguille et au moins un groupe de segments d'échelle, ce groupement de segments d'échelle au moins unique faisant partie de l'échelle d'affichage analogique, avec une aiguille pouvant indiquer une première grandeur d'affichage par rapport à un groupe de segments d'échelle éclairés d'au moins un groupe de segments d'échelle, tandis qu'une seconde grandeur d'affichage est affichée à l'aide d'un groupe de segments d'échelle éclairés, d'au moins un groupe de segments d'échelle, au moins un segment d'échelle (3, 5) étant commandé pour distinguer la première et la seconde grandeur d'affichage par la couleur, le contraste et/ou la luminosité par rapport aux autres segments d'échelle.

2. Dispositif d'affichage selon la revendication 1,
**caractérisé en ce que**
le dispositif (1 ; 10) comporte deux installations d'éclairage distinctes (7, 9) dont l'une est associée à plusieurs segments d'échelle (3) et l'autre comporte des éléments d'éclairage (15) particuliers associés chacun fois à un unique élément d'échelle (5).

3. Dispositif d'affichage selon la revendication 2,
**caractérisé en ce que**
les deux installations d'éclairage (7, 9) sont associées à des groupes d'échelles différents.

4. Dispositif d'affichage selon la revendication 3,
**caractérisé en ce que**
les segments d'échelle (3, 5) des deux groupes de segments d'échelle sont juxtaposés.

5. Dispositif d'affichage selon l'une quelconque des revendications 2 à 4,
**caractérisé en ce que**
les deux installations d'éclairage (7, 9) agissent sur un groupe de segments d'échelle communs.

6. Dispositif d'affichage selon la revendication 1,
**caractérisé en ce que**
le dispositif (100, 1000) comporte une installation d'éclairage (7) associée à plusieurs segments d'échelle (3) et au moins quelque uns et de préférence tous les segments d'échelle (3) comportent une installation de commutation (29) pour influencer les propriétés optiques des segments d'échelle (3).

7. Dispositif d'affichage selon la revendication 6,
**caractérisé en ce qu'**
on influence la luminosité et/ou la couleur des segments d'échelle (3) correspondants à l'aide de l'installation de commutation (29).

8. Dispositif d'affichage selon les revendications 6 ou 7,
**caractérisé en ce qu'**
à au moins un et de préférence à tous les segments d'échelle (3) est associée une installation de guidage de lumière (33), et
l'installation de commutation (29) est prévue entre l'installation de guidage de lumière (33) et l'installation d'éclairage (7).

9. Dispositif d'affichage selon l'une quelconque des revendications 2 à 8,
**caractérisé en ce qu'**
on influence la luminosité et/ou la couleur des segments d'échelle correspondants par les différents éléments d'éclairage séparés (15).

10. Application d'un dispositif d'affichage selon l'une quelconque des revendications 1 à 9 pour la présentation de valeurs réelles et de valeurs de consigne sur une échelle d'affichage notamment une régulation automatique de vitesse.
